# EUROPEAN PATENT APPLICATION

(11) **EP 1 473 729 A1**
(43) Date of publication of application: **03.11.2004**
(21) Application number: 04010362.4
(22) Date of filing: 30.04.2004
(51) Int. Cl.: G11B 27/10, G11B 27/28, G11B 27/32

(54) **Automatic video-contents reviewing system and method**

(30) Priority: 02.05.2003 KR 2003028334
(71) Applicant: LG ELECTRONICS INC., Seoul (KR)
(72) Inventor: Yoon, Kyoung Ro, Kangnam-gu Seoul (KR); Hyung, Jin Ho 402 Singoongjeon Manshion, Kyungg-do (KR); Jun, Sung Bae, Seoul (KR)
(74) Representative: Heinze, Ekkehard, Dr.

(57) **Abstract**

An automatic video-contents reviewing system and method using a bookmark and a summary view for contents is provided. The method including the steps of: searching information on a summary-view/normal reproduction conversion position, which is set for a user's selecting content, in response to a user's request for automatic video-contents review; and performing a summary-view reproduction for video contents up to the summary-view/normal reproduction conversion position, and after the summary-view reproduction is terminated, performing normal reproduction in a normal reproduction mode.

## Description

### BACKGROUND OF THE INVENTION

### Field of the Invention

The present invention relates to an automatic video-contents reviewing system and method using a bookmark and a summary view for contents.

### Description of the Related Art

Recent efforts are being made to record a user viewing record in a record unit, and provide a user with a service satisfying his/her fancy or provide the user with an adaptive function of viewing video contents. The efforts are being more increased due to appearance of Personal Video Recorder (PVR), especially.

One of adaptive video reproduction methods using a personal viewing record is that when the user selects any contents, the user is allowed to select whether reproduction is performed at an initial position or is restarted from a previous reproduction-discontinuation position.

In case where the reproduction is again performed from the previous reproduction-discontinuation position, there is an advantage in that the user can view the video contents from a non-viewed portion excepting for a previously viewed portion.

However, repetitive reproduction from the previous reproduction-discontinuation position is very helpful when a difference is not so large between a reproduction discontinuation time and a reproduction restart time, but the repetitive reproduction from the previous reproduction-discontinuation position is not so much helpful when the difference is very large.

Rather, it is useful for the user that summary-view reproduction is performed up to the previous reproduction-discontinuation position, and conversion is performed to be in a normal reproduction mode such that normal reproduction is performed from the previous reproduction-discontinuation position.

In a related-art PVR system where reproduction is restarted from the reproduction-discontinuation position, on-air video contents are stored in the record unit to be again viewed in the future or can be even concurrently recorded and reproduced using a time shift function.

The PVR system records a bookmark set by the user or the previous reproduction-discontinuation position for the video contents in the record unit to perform the repetitive reproduction from the previous reproduction discontinuation position, thereby allowing user convenience.

It can be understood that highlight for the summary view is one physical/logical content newly comprised of key scenes of the video contents. For example, there are "sports highlight", "movie announcement", "headline new" and the like.

Further, video skimming systems have been suggested in which even though a broadcast station does not provide a highlight stream or highlight information, a summary view is automatically provided through scene analysis and summary view index creation.

Accordingly, the user can request the summary-view reproduction even from any position on the way of the reproduction of the video contents.

Most of video summary-view systems does not provide physically edited contents as the highlight, and does create an index for logically designating whether any content portion is a segment to be reproduced in the summary view to provide the summary view. The user can designate the reproduction segment even up to a level of the summary view.

Recent various studies report that the scene analysis for the video contents and the summary view index creation on the basis of the scene analysis can be performed.

Further, it tends to develop various indexing algorithms and a video browsing method using the algorithms (smart skip and summary view) and integrate an indexing algorithm system and the video browsing methods with the PVR.

### SUMMARY OF THE INVENTION

Accordingly, the present invention is directed to an automatic video-contents reviewing system and method that substantially obviates one or more problems due to limitations and disadvantages of the related art.

An object of the present invention is to provide an automatic video-contents reviewing system and method in which a summary view function and a bookmark function for contents, in which a bookmark being generated due to a user's viewing, are used to perform summary-view reproduction at up to a corresponding bookmark position and perform normal reproduction in a normal reproduction mode from a subsequent position such that a user can view an once-viewed portion by a summary view to remember his/her own viewing portion, and can request the normal reproduction his/her own non-viewing portion, thereby enhancing user's satisfaction.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided an automatic video-contents reviewing system that can be not only applied to the previously recorded contents, but also can be operated even in a time shift mode to allow concurrent record and reproduction.

Further, the user can expressly designate a bookmark, and a previous reproduction-discontinuation position can be registered as the bookmark.

Furthermore, viewing record can be designated irrespective of the user, and information on user-viewing record can be recorded every user so as to support a multi user. The above viewing information can be recorded in the record unit of the system, in a portable smart cart and the like.

The bookmark for the contents is information on a designation position that the user expressly or suggestively creates on the way of reproduction of the contents, and the bookmark information can be the designation position that the user directly sets for access, a position at which the user repetitively reproduces, or a position at which the user discontinues to view during the viewing of the contents.

In the inventive automatic video-contents reviewing system, summary-view reproduction (summary, highlight) is performed up to a position that is expressly or suggestively designated by the user, and a video reproduction mode is altered to a normal reproduction mode to perform normal reproduction from after a corresponding position, thereby enhancing a larger satisfaction degree than when the user requests the reproduction from the previous viewing position.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a diagrammatic view illustrating a function of automatic video-contents review according to a preferred embodiment of the present invention;

Fig. 2 is a flowchart illustrating an automatic video-contents reviewing method according to a preferred embodiment of the present invention; and

Fig. 3 is a block diagram illustrating an automatic video-contents reviewing system according to a preferred embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

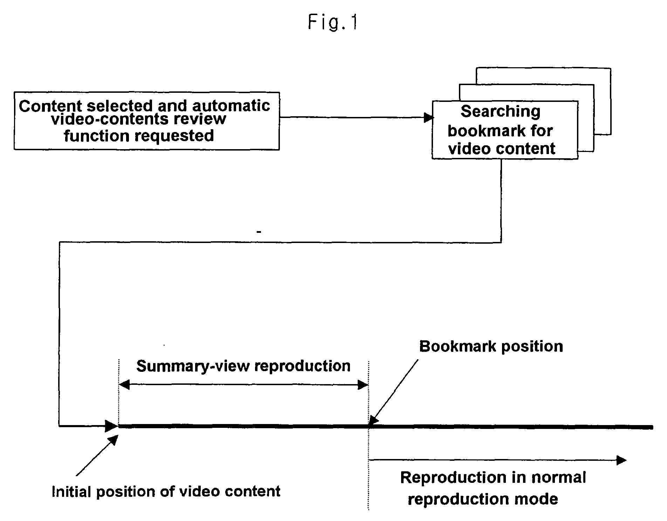

Fig. 1 is a diagrammatic view illustrating a function of intelligent automatic video-contents review using a bookmark and a summary view for contents according to a preferred embodiment of the present invention.

The inventive automatic video-contents reviewing method includes: searching information on a summary-view/normal reproduction conversion position, which is set for a user's selecting content, in response to a user's request for automatic video-contents review; and performing a summary-view reproduction for video contents up to the summary-view/normal reproduction conversion position, and after the summary-view reproduction is terminated, performing normal reproduction in a normal reproduction mode.

In the present invention, summary-view/normal reproduction conversion position information can be bookmark information on video contents, for example.

As shown in Fig. 1, in the inventive automatic video-contents reviewing method, if a user selects the content and requests the automatic video-contents reviewing function, the bookmark information on the user's selecting content is loaded, and compressive information at up to the position of the searched bookmark is provided using the summary view function, and the video contents are reproduced in the normal reproduction mode after the summary-view reproduction is terminated at up to a summary-view termination position determined by the bookmark, thereby providing the user with the intelligent automatic video-contents reviewing function using the bookmark and the summary view for the contents.

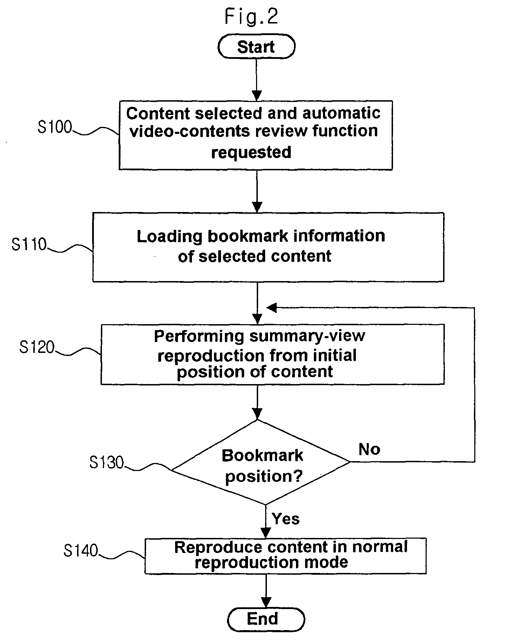

Fig. 2 is a flowchart illustrating an automatic video-contents reviewing method according to a preferred embodiment of the present invention.

As shown in Fig. 2, the user selects the content and requests the automatic video-contents reviewing function (S100).

Additionally, the bookmark information on the user's selecting content is loaded to terminate the summary view and obtain information on a position at which normal reproduction would be started (S110).

Next, summary-view reproduction is performed from an initial position of the contents and then, it is determined whether or not a position, at which the summary-view reproduction is currently performed, is a position at which the summary-view reproduction is terminated and the normal reproduction is started and which is obtained on the basis of the loaded bookmark information (S120) (S130).

In case where a current position is not the bookmark position, the summary-view reproduction is continued. When the current position reaches the bookmark position, a corresponding content is reproduced in the normal reproduction mode from after the bookmark position (S140).

As described above, the bookmark information on the user's selecting content is used to provide the user with the intelligent automatic video-contents reviewing function using the bookmark and the summary view for the contents.

In order to perform the above operation, the bookmark information is needed. The bookmark information can be recorded in a nonvolatile recording medium as information on a position at which the user previously designates during viewing or information on a position at which the user previously discontinues the viewing during the viewing.

The record unit of an automatic video-contents reviewing system such as a disc or a smart card such as a portable nonvolatile record unit can be used as the nonvolatile recording medium.

Further, each of different bookmarks can be recorded every user, and the bookmark only for the contents can be also recorded irrespective of the user. In order to record the bookmark every user, a login process is merely needed in the reviewing system. The login process can be performed in a simple method using a password, a biometric method, and a method for supporting a multi user in different reviewing systems such as a smart-card recognition method.

Furthermore, the summary-view reproduction is performed from the initial position to the bookmark position of the contents can use highlight information that is physically edited and provided from a broadcast station, logical highlight information that is provided from the broadcast station, or summary view information that the reviewing system previously creates on the way of recording of the contents in a scene analysis method and the like.

Here, in the description method of the highlight information, the highlight information can be comprised of highlight segment information, and information on a level of the summary view can be also described so as to provide a multi-step highlight.

The summary-view reproduction can be performed using highlight information or scene conversion information that is provided from the broadcast station, and can be performed in a related-art video skimming provision method in which the summary view is performed through scene conversion analysis in an environment in which the highlight information or the scene conversion information is not separately provided from the broadcast station.

In the meantime, the present invention can determine a level of a corresponding summary view so as to perform the summary-view reproduction up to the bookmark position. That is, in case where a multi-step highlight information skim is used, the highlight is provided adaptively to the level of the summary view. Otherwise, the level of the summary view of video skimming can be altered, thereby providing the highlight requested by the user.

Several bookmarks can be also designated at one content. In case where there are several bookmarks at one content, the user can directly determine or the reviewing system can also determine the bookmark at up to the position at which the summary-view reproduction is performed.

In case where the reviewing system selects and determines the bookmark, a weight-value function for a variety of information can be applied. The weight-value function can be synthetically determined depending on whether or not the bookmark is the one that the user directly designates, or whether or not the position is the one at which the reproduction is previously discontinued, or whether or not information refers to information on the video portion that the user repetitively and severally views.

In the meantime, the inventive automatic video-contents reviewing system includes: a signal input unit for inputting a digital video content signal; an instrument operation unit for receiving a user command therethrough; an output unit for outputting video contents therefrom; a storage unit for storing the inputted digital video content signal, and index information; and a system control unit for controlling to select a corresponding content in response to user's selection and operation using the signal input unit, and controlling to perform a summary-view reproduction up to a designated position on the basis of the index information on the selected content, and controlling to perform subsequent normal reproduction.

If a digital Audio/Video (A/V) signal is inputted through a signal input unit, a system control unit controls to store the inputted signal in a storage unit.

If the user selects the video content and requests the automatic video-contents reviewing function through an instrument operation unit, the system control unit searches the summary-view/normal reproduction conversion position information on the corresponding video contents. Here, the summary-view/normal reproduction conversion position information is the bookmark information on the video contents, for example. The bookmark information can be recorded in the record unit (nonvolatile memory) of the reviewing system itself, or in the smart card that is the portable nonvolatile memory.

The system control unit controls to perform the summary-view reproduction from the initial position of the corresponding video content to the bookmark position on the basis of the searched bookmark information, thereby outputting the summary view through an output unit. The system control unit controls to be in the normal reproduction mode from after the bookmark position to reproduce and output video contents at a normal speed through the output unit.

Here, information for the summary-view reproduction can be also provided from the external (broadcast station), and summary-view index information on the inputted or stored video contents can be also automatically created and stored for use.

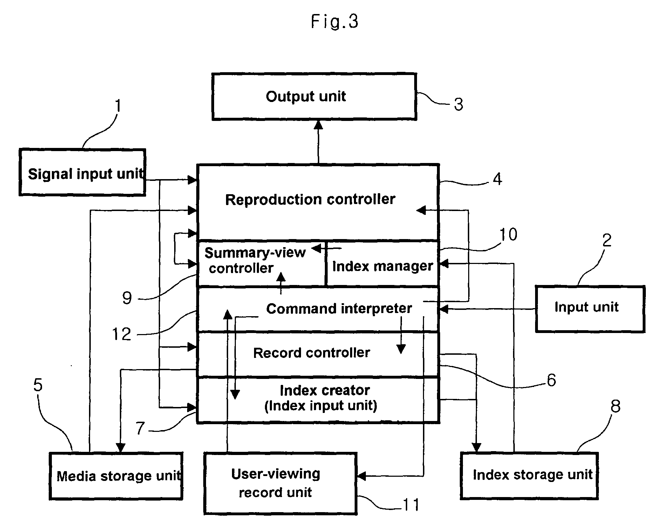

Fig. 3 is a block diagram illustrating an intelligent automatic video-contents reviewing system using the bookmark and the summary view for the contents according to a preferred embodiment of the present invention.

The intelligent automatic video-contents reviewing system of Fig. 3 includes: a signal input unit 1 for inputting the digital A/V signal thereto; an input unit 2 comprised of a keyboard, a remote controller and the like, for transmitting a user command to the reviewing system; an output unit 3 comprised of a monitor, a speaker and the like, for outputting the digital A/V signal therefrom; a reproduction controller 4 being in charge of variously controlling the reproduction of the video-contents, and being in charge of controlling the summary-view reproduction and the normal reproduction, and being in charge of controlling alteration of a corresponding reproduction mode; a media storage unit 5 for storing an A/V stream inputted through the signal input unit 1; a record controller 6 for controlling to store an A/V source inputted through the signal input unit 1; an index creator 7 for extracting a shot index and a summary-view index of the stream, which is stored in the media storage unit 5 by the record controller, or an index input unit 7 for receiving the summary-view index from the broadcast station; an index storage unit 8 for storing the created shot index and summary-view index, or the summary-view index that is transmitted from the broadcast station; a summary-view controller 9 for controlling to interpret the summary view information to transmit the interpreted information to the reproduction controller 4; an index manager 10 for loading the index from the index storage unit 8 to transmit the loaded index to the summary-view controller 9 and the reproduction controller 4; a user-viewing record unit 11 for recording user-viewing information; and a command interpreter 12 for interpreting the user command inputted through the input unit 2 and the user-viewing record unit 11 to provide to control the creation and record of the index, the summary view and the reproduction.

According to a user's request for the intelligent automatic video-contents review, the above-constructed intelligent automatic video-contents reviewing system loads the bookmark information that is set for the user's selecting content, and provides the compressive information of up to the position of the searched bookmark by using the summary view function, and performs the summary-view reproduction in the normal reproduction mode after the summary-view reproduction of up to the corresponding position is terminated, thereby providing the user with the intelligent automatic video-contents reviewing function using the bookmark and the summary view for the contents.

In case where the broadcast station directly provides the summary-view index information or the shot index information, the index creator is not needed. In case where the broadcast station does not directly provide the summary-view index information or the shot index information, the index creator directly creates the shot index information and the summary-view index information.

A brief description for the operation of the reviewing system is as follows.

If the digital A/V signal is inputted, the reproduction controller 4 controls to record the input stream through the record controller 6 or output the input stream through the output unit 3 depending on the current state of the reviewing system.

Since the reviewing system of Fig. 3 can not only reproduce the video contents but also can record the video contents, the input stream is stored in the media storage unit 5 such as the disc when the reviewing system is in a record mode. Further, if the input A/V signal includes the scene conversion information or the summary-view index information, the corresponding index is stored in the index storage unit 8 through the index input unit 7. Otherwise, the scene conversion index and the summary-view index, which are created by the index creator, are stored in the index storage unit 8.

Further, the user-viewing record unit 11 records the bookmark information therein, which is expressly or suggestively designated by the user. If the user requests the intelligent automatic video-contents reviewing function using the bookmark and the summary view for a specific content through the input unit 2, the index manager 10 loads the index from the index storage unit 8 depending on the interpretation of the command interpreter 12, and also loads viewing-relation information from the user-viewing record unit 11 to search the bookmarks.

If one bookmark is determined among the searched bookmarks, the summary-view controller 9 controls to perform the summary-view reproduction up to the corresponding bookmark position through a continuous communication with the reproduction controller 4, thereby outputting the summary view through the output unit 3. If the summary-view reproduction is performed up to the corresponding bookmark position, the reproduction controller 4 controls to be again in the normal reproduction mode, thereby reproducing and outputting the corresponding content through the output unit 3.

The inventive intelligent automatic video-contents reviewing method and system using the bookmark and the summary view for the contents can overcome a related-art disadvantage in which repetitive normal reproduction is not effectively performed from at a previous reproduction-discontinuation position in case where there is a large difference between a reproduction discontinuation time and a reproduction start time.

Additionally, the user is provided with the summary-view reproduction for the previously viewed portion, and is provided with the normal reproduction from the corresponding position. Accordingly, the inventive intelligent automatic video-contents reviewing method and system have an advantage in that the user does not have a concern about missing of the non-viewed portion since the normal reproduction is performed from the previous reproduction-discontinuation position in the normal reproduction mode, and in that the user is provided with a smooth connection with a new viewing portion since he/she obtains the compressive information on the previously-viewed portion.

The inventive reviewing function can be instantly integrated with a related-art Personal Video Recorder (PVR), and intelligently provides the user with a function of the summary view for the contents irrespective of whether or not the broadcast station provides the summary view, thereby enhancing a quality of the video record/reproduction unit. Further, since the inventive reviewing function can be not only applied to recorded contents but also to record-on contents, an operation can be performed even in the time-shift mode.

It will be apparent to those skilled in the art that various modifications and variations can be made in the present invention. Thus, it is intended that the present invention covers the modifications and variations of this invention provided they come within the scope of the appended claims and their equivalents.

## Claims

1. An automatic video-contents reviewing method, comprising the steps of:
searching information on a summary-view/normal reproduction conversion position, which is set for a user's selecting content, in response to a user's request for automatic video-contents review; and
performing a summary-view reproduction for video contents up to the summary-view/normal reproduction conversion position, and after the summary-view reproduction is terminated, performing normal reproduction in a normal reproduction mode.

2. The method according to claim 1, wherein the summary-view/normal reproduction conversion position information is bookmark information on a corresponding video content.

3. The method according to claim 1, wherein the summary-view/normal reproduction conversion position information is information on a position that a user previously designates during viewing, or information on a position at which the user previously discontinues the viewing during the viewing.

4. The method according to claim 1, wherein the summary-view/normal reproduction conversion position information informs a system of whether who is the user such that the system recognizes who is a current user and records information on the current user every user.

5. The method according to one of the preceding claims, wherein the summary-view reproduction is performed up to a corresponding position by using physical highlight information provided from a broadcast station, or is performed by using logical highlight information provided from the broadcast station.

6. The method according to one of the preceding claims, wherein the summary view is summary-view information, which is automatically generated by an automatic indexing unit in a video storage and reproduction unit.

7. The method according to one of the preceding claims, further comprising the steps of:
determining a level of the summary view at a duration of the summary view to request the system for the level of the summary view; and
executing the summary view of the requested level.

8. The method according to one of the preceding claims, wherein when the summary-view/normal reproduction conversion position information is severally provided, the user directly determines position information of up to a position at which the summary-view reproduction is performed, among the severally-provided position information.

9. The method according to one of claims 1 to 7, wherein when the summary-view/normal reproduction conversion position information is severally provided, the system automatically determines the position information of up to the position at which the summary-view reproduction is performed, among the severally-provided position information.

10. The method according to one of the preceding claims, wherein the automatic determination of the summary-view/normal reproduction conversion position information is performed with reference to at least one of whether or not position is the one that the user directly designates, whether or not position is the one at which the user previously discontinues to view, and whether or not a reproduction portion is the one that is repetitively and severally reproduced, or the automatic determination is performed using weighted values respectively provided for items to be referenced.

11. An automatic video-contents reviewing system comprising:
a signal input unit for inputting a digital video content signal;
an instrument operation unit for receiving a user command therethrough;
an output unit for outputting video contents therefrom;
a storage unit for storing the inputted digital video content signal, and index information; and
a system control unit for controlling to select a corresponding content in response to user's selection and operation using the signal input unit, and controlling to perform a summary-view reproduction up to a designated position on the basis of the index information on the selected content, and controlling to perform subsequent normal reproduction.

12. The system according to claim 11, further comprising a record unit for storing the summary-view/normal reproduction conversion position information as a system record unit or a portable record unit.

13. The system according to claim 11 or 12, further comprising a summary-view index create unit for extracting the summary-view/normal reproduction conversion position information on the video contents to store the extracted position information in the storage unit.
